Europäisches Patentamt

(19) **European Patent Office**

**Office européen des brevets**

(11) Veröffentlichungsnummer: **0 220 505**
A2

(12) # EUROPÄISCHE PATENTANMELDUNG

(21) Anmeldenummer: **86113249.6**

(22) Anmeldetag: **26.09.86**

(51) Int. Cl.⁴: **F 01 N 3/02,** F 01 N 3/28

(30) Priorität: **26.10.85 DE 3538107**

(43) Veröffentlichungstag der Anmeldung: **06.05.87**
**Patentblatt 87/19**

(84) Benannte Vertragsstaaten: **AT DE FR GB IT NL SE**

(71) Anmelder: **MAN Technologie GmbH, Dachauer Strasse 667, D-8000 München 50 (DE)**

(72) Erfinder: **Bulang, Wolfgang, Dr. rer. nat., Lavendelweg 6, D-8031 Eichenau (DE)**

(54) **Filter zur Reinigung von Abgasen.**

(57) Es wird ein Filter zur Reinigung von Abgasen (21), insbesondere von Dieselmaschinen, vorgeschlagen, der ein großvolumiges Filterelement (14) aus möglichst einem Material mit hoher Wärmekapazität hat. Bei genügend großem Speichervermögen des Filters, das eine auf die Oxidation von Ruß wirkende katalytische Beschichtung hat, kann sich während des Betriebes der Verbrennungsmaschine (10) bzw. eines diesen enthaltenden Fahrzeugs ein Gleichgewicht zwischen Abscheidung und Abbrand des Rußes einstellen. Damit kann ein weitgehend kontinuierlicher Abbrand der Rußpartikel direkt durch die Abgase bewirkt werden. Ein derartiger Filter kann durch die Motorbelastung anhebende Maßnahmen (15–19), die sporadisch eingesetzt werden, ergänzt werden. Ein derartiger Filter kann so ausgebildet werden, daß er eine schalldämpfende Wirkung hat, so daß ein weiterer Schalldämpfer entfallen kann.

MASCHINENFABRIK AUGSBURG-NÜRNBERG
Aktiengesellschaft
gü/sd

München, 15. Oktober 1985

## Filter zur Reinigung von Abgasen

Die Erfindung bezieht sich auf einen Filter zur Reinigung von Abgasen von Verbrennungsmaschinen, insbesondere Dieselmotoren, bestehend aus einem porösen Filterelement.

Die Anwendung von Filtern im Abgasstrang von Verbrennungsmaschinen ist vielseitig bekannt. Mit katalytisch wirkenden Filtern, den sogenannten Katalysatoren werden im allgemeinen schädliche Gasanteile aus den Abgasen umgewandelt. Bei Dieselmaschinen steht der Rußfilter im Vordergrund, der im allgemeinen aus einem porösen Filterelement aus Drahtgewebe oder Schaumkeramik mit Tiefenfilterwirkung hat.

Allen Filtern wird die gemeinsame Anforderung gestellt, die Abgase weitestgehend von den schädlichen Stoffen zu befreien. Derartige Filter, die am häufigsten in Fahrzeugen zum Einsatz kommen, werden aufgrund des geringen Raumangebotes mit möglichst kleinen Abmessungen hergestellt und durch Einrichtungen ergänzt, mit denen deren Filterwirkung auf die Dauer aufrechterhalten werden kann.

7.2334

Der Erfindung liegt die Aufgabe zugrunde, ein Filterkonzept der eingangs genannten Art zu entwickeln, bei dem man ohne aufwendige Zusatzeinrichtungen auskommen kann.

Die Aufgabe wird durch die im Anspruch 1 gekennzeichneten Merkmale gelöst.

Durch die Verwendung von Filterelementen, deren Volumen größer ist als die bisher konzipierten Filter ist, ist es möglich, die Reaktionskapazität im Einklang zur Reaktionsgeschwindigkeit zu bringen derart, daß eine wirksme Reinigung der Abgase möglich ist. Im Falle von Katalysatoren wird dabei die Verweildauer des Abgases im Filter mit der Reaktionsgeschwindigkeit im Einklang bringbar sein, so daß eine vollständige Reinigung des Abgases möglich ist.

Dieser Effekt wird erreicht, wenn das Volumen des Filterelementes mindestens so groß, vorzugsweise etwa doppelt so groß ist, wie das Hubvolumen des Verbrennungsmotors, wobei davon ausgegangen werden wird, daß das Porenvolumen mindestens 80% des Filterelement-Volumens einnimmt. Bei Schaumkeramik-Filterelementen erreicht das Porenvolumen mindestens 90% des makroskopischen Volumens des Elementes.

Bei der Verwendung von großvolumigen Filtern als Partikelfilter verlängert sich die wirksame Filterperiode, so daß im normalen Fahrbetrieb eines Fahrzeuges aufgrund von immer wieder auftretenden höheren Motorbelastungen ein Abbrandvorgang der im Filter zurückgehaltenen Partikeln sich einstellen kann. Es ist also aufgrund des größeren Speichervermögens eines großvolumigen Filters mit katalytischer Beschichtung möglich, einen kontinuierlichen Abbrand der Rußpartikel zu erreichen, wobei ein gezielter

7.2334
15.10.1985

Abbrand relativ selten eingesetzt werden muß. Der Abbrand der im Filter festgehaltenen oxidierbaren Partikeln kann in weiten Grenzen des Motor-Betriebsbereiches durch die katalytische Beschichtung der Wirkflächen des Filters sichergestellt werden. Dazu eignet sich insbesondere eine Edelmetallbeschichtung aus Pt/Pd/Rh im Verhältnis von 5-6/5-6/1. Es hat sich herausgestellt, daß bereits eine sehr dünne Schicht bei dem großvolumigen Filter ausreicht, um die Partikel bei Abgastemperaturen, die bei Vollast und darunter entstehen, zu oxidieren. Die dünne Schicht kann beispielsweise durch Eintauchen des Filterelementes in eine Edelmetallösung mit 1-2 g/Liter erreicht werden.

Für den gezielten Regeneriervorgang eines Filters können dabei ohne weiteres auf den Betrieb der Verbrennungsmaschine einwirkende Maßnahmen getroffen werden, nachdem diese Maßnahmen nur selten, kurzzeitig und mit geringer Einwirkung eingesetzt zu werden brauchen. So eine Maßnahme kann beispielsweise in der Drosselung der Ansaugluft des Motors oder des Abgasstromes bestehen, wobei sich höhere Abgastemperaturen einstellen, die die Kontinuität des Rußabbrandes sicherstellen. Eine deratige Drosselung ist aufgrund des großen Speichervolumens des Filters relativ selten zu betreiben, wobei im allgemeinen eine geringe Drosselung bereits ausreichen kann, um die Abbrandkontinuität sicherzustellen.

Eine weitere Maßnahme für die Regenerierung des Filters kann darin bestehen, daß in Strömungsrichtung unmittelbar vor dem Filterelement ein oder mehrere Düsen münden, durch die ein Oxidationsmittel einsprühbar ist, womit der abgelagerte Ruß örtlich entzündet wird. Auch ein leicht entflammbares Mittel, wie Methanol, kann dabei verwendet werden.

7.2334
15.10.1985

Versuche haben ergeben, daß eine Filter-Speicherkapazität eines Filterelementes mit 90% Porenvolumen und einem Gesamtvolumen von 1,5 - 2-fache des Hubvolumens des zugehörigen Dieselmotors ausreichen, um die oben geschilderten Wirkungen zufriedenstellend zu erreichen. Die mit dem großvolumigen Filter erzielte Wirkung kann durch die Wahl von Filterelementen mit hoher Wärmekapazität noch weiter unterstützt werden, indem der Filter gleichzeitig als Wärmespeicher arbeitet und somit kurzzeitige Betriebssituationen mit geringerer Abgastemperatur überbrückt werden, ohne den gezielten Abbrandvorgang einleiten zu müssen.

Gemäß einer weiteren Ausgestaltung der Erfindung hat das Filterelement (14, 14') in Abgasströmungsrichtung eine sich verändernde Porosität, wobei stromauf vorzugsweise größere Poren, etwa in der Ordnung zwischen 50 - 60 Poren/cm und stromab kleine Poren zwischen 80 und 100 Poren/cm vorgesehen werden.

Die Wirkfläche eines Filters, nämlich die aller Porenwände des Filters, läßt sich durch Reduzieren des Porendurchmessers vergrößern. Eine vorteilhafte Auslegung der Filterwirkung in dieser Richtung steht jedoch die Forderung für den Abgasdurchlaß entgegen, nämlich den Luftwiderstand im Filter so gering wie möglich zu halten.

Es muß daher ein Kompromiß gewählt werden, bei dem sich einerseits ein tragbarer, geringer Gegendruck einstellt und andererseits eine noch wünschenswerte Filter-Wirkfläche bestehen bleibt. Bei größeren Filterdicken sind große Poren, etwa bei 50 - 60 Poren/cm vorzuziehen. Es hat sich aber herausgestellt, daß mit derartigen, relativ großen Poren größere Partikel, wie sie bei Dieselmotoren im Vollastbetrieb ausgestoßen werden, nicht in ausreichendem Maße zurückgehalten werden können.

7.2334
15.10.1985

Es wird daher vorgeschlagen, den Filter mit einer in Abgasströmungsrichtung **abnehmenden** Porengröße auszubilden. Die Partikeln werden sich im wesentlichen im vorderen Filterteil ablagern. Solche Partikeln, die diesen größerporigen Bereich durchqueren, werden dann im feinerporigen Endbereich des Filters festgehalten. Es kann dadurch eine gleichmäßige Ablagerung über den gesamten Querschnitt des Filters erreicht werden, wobei alle Partikeln - unabhängig von ihrer Größe - zurückgehalten werden können, während der Luftwiderstand noch in vernünftigen Grenzen haltbar ist und die Wirkung des großvolumigen Filters voll zum Tragen kommt, d.h., nicht geschmälert wird, wie etwa durch örtlich ungleichmäßige Ablagerungen.

Die Porengröße bzw. deren **Gradient** kann durch kontinuierliche oder stufenweise Änderung unter Beachtung der Filterdicke und Filteroberfläche optimal ausgelegt werden.

Das erwünschte Filtervolumen kann mit einem einteiligen oder mehrteiligen Filterelement realisiert werden, wobei die Komponenten eines mehrteiligen Filters entweder zu einem einteiligen Filterelement zusammengefaßt oder getrennt, parallel oder in Reihe vom Abgas durchströmbar angeordnet werden. Es läßt sich dabei für die verschiedenen Anwendungsfälle jeweils eine räumliche Anordnung finden, mit der die mit dem Filter zusammenhängenden Eigenschaften optimal einstellbar sind.

Eine in diesem Sinne bevorzugte Anordnung besteht in der Verwendung mehrerer Komponenten, die als dickwandige Filterrohre beliebigen Querschnitts ausgebildet, parallel zueinander in einem gemeinsamen Filtergehäuse angeordnet sind und gemeinsam ein Filterelementvolumen aufbringen, das etwa dem doppelten Hubvolumen des Motors entspricht.

7.2334
15.10.1985

Durch die Wahl der Strömungsrichtung durch die Filterrohrwände von außen nach innen bieten die parallel durchströmten Filterelemente eine große Anströmfläche, die eine kleinere Porengröße und/oder dickere Wandstärke der Filterrohre zuläßt.

Das Filtergehäuse wird zumindest im Mantelbereich wärmeisoliert, um eine Abkühlung des Abgases vor dem Durchströmen des einteiligen oder mehrteiligen Filterelementes zu vermeiden. Bei der Verwendung von Filterrohren aus Schaumkeramik werden diese innerhalb des Filtergehäuses vorteilhaft in Drahtgestrick eingebettet, um auftretende Schwingungen zu dämpfen und damit Beschädigungen der Filterrohre zu vermeiden.

Selbstverständlich ist es auch möglich, die Filterrohre von innen nach außen durchströmen zu lassen.

Eine raumsparende Ausführung besteht in der Anordnung von sieben Filterrohren, die sich kompakt zusammenfassen und in einfacher Art mit Lochblechböden im Gehäuse haltern lasen.

Ein großvolumiges Filterelement ist in der Lage, Schallwellen, die aufgrund des Motorlaufs entstehen, bis zu einem gewissen Grad zu dämpfen. Dieser zusätzliche Vorteil kann genutzt werden, indem mit einfachen Zusatzmitteln der Filter die Funktion des Schalldämpfers übernimmt.

Eine einfache Ausgestaltung besteht in der Bildung von Expansionskammern innerhalb des Filtergehäuses. Es kann dabei vorzugsweise eine Kammer vor bzw. nach dem Filterelement vorgesehen werden, wobei in einer Kammer zusätzlich ein Rohr aus einem Lochblech als Resonator angeordnet sein kann.

7.2334
15.10.1985

Die Erfindung wird anhand von in der Zeichnung schematisch dargestellten Ausführungsbeispielen näher erläutert.

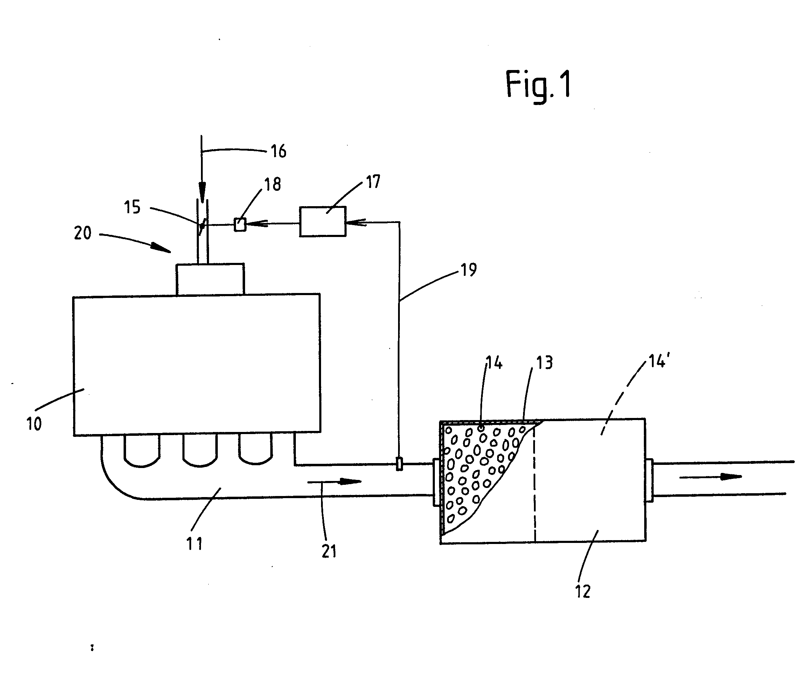

Fig. 1 zeigt einen Verbrennungsmotor 10, in dessen Abgasstrang 11 ein großvolumiger Filter 12 zwischengeschaltet ist. Der Filter 12 besteht aus einem Gehäuse 13, in dem ein Filterelement aus poröser Keramik 14 angeordnet ist. Der Verbrennungsmotor 10 ist ferner mit einer Drosselklappe 15 zur Regulierung des Verbrennungsluftstromes 16 versehen, die mittels eines Reglers 17 und einer Stelleinrichtung 18 in Abhängigkeit des Abgasgegendruckes 19 im Abgaskanal vor dem Filter 12 steuerbar ist. Die Drosselklappe 15 kann die in dem Brennstoff-Luftzufuhrsystem 20 vorgesehene Klappe sein.

Die aus der Verbrennungsmaschine 10 austretenden Abgase 21 strömen durch das mit einer katalytisch wirkenden Beschichtung versehene Filterelement 14, in dem entsprechend der Beschichtung Umwandlungen von Abgasanteilen erfolgen. Der Filter 12 ist dabei so groß dimensioniert, daß bei entsprechenden Reaktionsgeschwindigkeiten bei maximalem Abgasdurchsatz eine nahezu vollständige Umwandlung der gewünschten Abgasanteile erfolgt. Das Volumen des Filterelementes 14, das gemäß Fig. 1 dem des Filtergehäuses 13 entspricht, ist etwa doppelt so groß wie der Hubraum des Verbrennungsmotors. Bei derartigen Abmessungen und einem Porenvolumen von etwa 90% des Filtervolumens wird eine so große Wirkfläche, die durch die Oberfläche der Porenwände gebildet ist, geboten, die eine wirksame Umwandlung der schädlichen Gasanteile aus dem hohen Abgasdurchsatz erlaubt.

7.2334
15.10.1985

Im Falle eines Dieselmotors 10 dient der Filter 12 in erster Linie als Partikel- bzw. Rußfilter, wobei er ebenfalls mit einer katalytischen Beschichtung versehen ist, die jedoch eine oxidierende Wirkung auf Ruß- und Kohlenwasserstoff-Partikeln sowie Kohlenmonoxid hat. Das Speichervolumen des Filterelementes 14 ist dabei so dimensioniert, daß sich ein Gleichgewicht zwischen der Abscheidung von Partikeln und dem Abbrand derselben einstellt, das einen kontinuierlichen Abbrand der Rußpartikel gewährleistet. Es hat sich gezeigt, daß ein Volumen des Filterelementes 14 in der Größe des doppelten Hubvolumens des Verbrennungsmotors 10 bereits ein ausreichendes Speichervolumen bietet, um über einen weiten Betriebsbereich den selbständigen Abbrand bzw. den Gleichgewichtszustand zwischen Abbrand und Abscheidung aufrechtzuerhalten. Dabei wurde von einem Filterelement mit etwa 90% Porenvolumen ausgegangen. Das Speichervolumen für die Partikeln entspricht dann einem Bruchteil des Porenvolumens, nachdem Durchströmkanäle für das Abgas freibleiben müssen.

Bei längeren, ungünstigen Betriebsbedingungen mit überwiegendem Teillastbetrieb im niedrigeren Bereich wird die Reaktionsgeschwindigkeit für die Partikeloxidation bei einem derartig dimensionierten Filter nicht mehr ausreichen, um den Gleichgewichtszustand aufrechtzuerhalten. Für diese Fälle ist eine Regelung der Verbrennungsluftzufuhr 16 mittels der Drosselklappe 15 vorgesehen, die die Zufuhr der Verbrennungsluft 16 soweit drosselt, daß sich eine ausreichend hohe Abgastemperatur einstellt. Diese gezielte Regenerierphase wird beispielsweise in Abhängigkeit des Gegendruckes 19 im Abgasrohr 11 eingeleitet.

7.2334
15.10.12985

Es sind selbstverständlich auch andere die Motorbelastung erhöhende Maßnahmen für den gezielten Regeneriervorgang möglich. Durch die Wirkung des großvolumigen Filters 12 wird auf jeden Fall die Häufigkeit des Einsatzes von derartigen gezielten Regeneriervorgängen gegenüber bisher konzipierten kleinen Filtern deutlich gemindert, so daß eine Beeinträchtigung des Verbrennungsmotors bzw. des Fahrbetriebes gering gehalten wird.

Für den gezielten Regeneriervorgang können auch Zündeinrichtungen oder Brenner vorgesehen werden, wobei der großvolumige Filter 12 zur Reduzierung des Energieverbrauches durch die Brenner bzw. Zündeinrichtungen beiträgt.

Bei der Wahl eines Filterelementes 14 mit hoher Wärmekapazität wird der Effekt des voluminösen Filters verstärkt, indem das Filterelement gleichzeitig als Wärmespeicher und damit zur Überbrückung von Betriebsperioden mit geringerer Abgastemperatur dient. Damit kann die Häufigkeit, mit der die gezielte Verbrennung eingeschaltet werden muß, nochmals reduziert werden.

Der Filter 12 kann ein mehrteiliges Filterelement 14, 14' enthalten, wobei die einzelnen Filterelement-Komponenten 14 bzw. 14' je nach Anwendung aus unterschiedlichen oder gleichen Strukturen bestehen und/oder unterschiedlich beschichtet werden können. Es kann damit eine vorteilhafte Kombination konstruiert werden, bei der sowohl Partikel als auch schädliche Gase aus den Abgasen 21 vollständig entfernt werden können. Eine gute Wirkung wird mit einem Filter 12 erreicht, dessen Volumen auf eine ausreichende Speicherkapazität für zurückzuhaltenden Ruß ausgelegt ist, und der aus einem oder zwei in Abgasströmungsrichtung hintereinander angeordne-

7.2334
15.10.1985

ten Filterelementen 14 bzw. 14' besteht. Dabei ist die zuerst beaufschlagte Filterkomponente 14 mit einer Katalysator-Beschichtung versehen, die eine oxidierende Wirkung auf Ruß- und Kohlenwasserstoff-Partikeln hat. Während die darauffolgende Komponente 14' eine die Oxidation von CO zu $CO_2$ bewirkende katalytische Schicht hat. Gegenüber den Rußpartikeln wirkt der Filter 12 mit seinem Gesamtvolumen, wobei in der ersten Komponente 14 die entsprechend wirkende katalytische Schicht die Zündtemperatur für den Ruß herabsetzt und damit den automatischen Abbrand mit den heißen Abgasen 21 bewirkt. Durch die Exothermie des Abbrandes erhöht sich innerhalb des ersten Filterteiles 14 die Abgastemperatur, so daß die hier erfolgende Entzündung des Rußes einen Abbrand des Rußes in der zweiten Komponente 14' bewirken kann. Für die Reduzierung von Gasbestandteilen (CO, $NO_x$)steht die zweite Komponente 14' des Filters 12 zur Verfügung.

Ein mehrteiliges Filterelement eignet sich gut für die Fälle, bei denen eine unterschiedliche Porosität entlang der Strömungslinie erwünscht ist. Die Filterkomponenten werden dann unterschiedliche Porosität haben und derart angeordnet sein, daß die Porosität in Abgasströmrichtung abnimmt. Selbstverständlich ist eine kontinuierliche oder stufenweise Veränderung der Porosität auch in einem einteiligen Filterelement realisierbar.

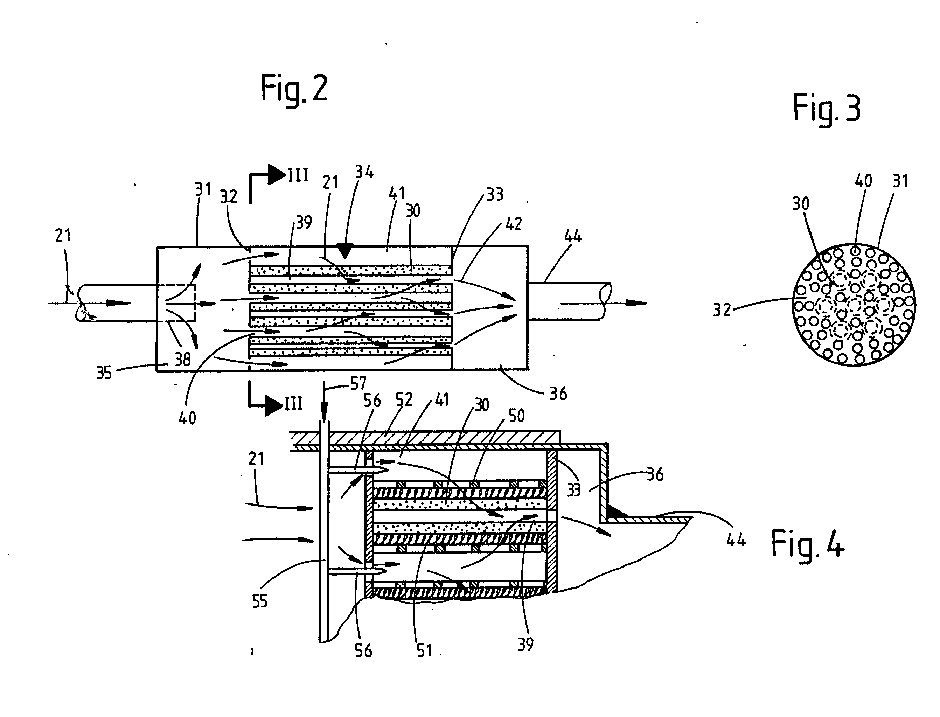

Fig. 2 zeigt ein weiteres Ausführungsbeispiel, bei dem das Filterelement 34 mehrteilig ist, d.h., aus mehreren Filterrohren 30 besteht. Die Filterrohre 30 können aus poröser Keramik, Drahtgeflecht oder im Wickelverfahren hergestellt sein. Die Filterrohre 30 sind in einem Gehäuse 31 mittels Lochblechen 32, 33 befestigt, das gleichzeitig einen Schalldämpfer darstellt. Dazu ist in Strömungsrichtung des Abgases 21 vor dem Filterelement 34 eine Expansionskammer 35 sowie eine zweite Expansionskammer

7.2334
15.10.1985

36 nach dem Filterelement 34 innerhalb des Gehäuses 31 vorgesehen. Mit diesen einfachen Maßnahmen und unter Nutzung des vorhandenen, großvolumigen Filterelementes 34 lassen sich die Schallwellen wirkungsvoll dämpfen, bei dem das großvolumig ausgelegte Filterelement 34 einen bedeutenden Beitrag leistet. In der ersten Kammer 35 kann zusätzlich ein als Resonator dienendes Rohr 38 aus einem Lochblech angeordnet werden.

Die Verwendung von sieben Filterrohren 30 mit einem zentrischen Rohr und sechs um das zentrische Rohr angeordneten Rohren läßt sich eine kompakte Anordnung von Filterrohren 30 erzielen.

Fig 3 zeigt einen Querschnitt der Vorrichtung gemäß Fig. 2 auf der Höhe des ersten Lochbleches 32. Dieses Lochblech 32 ist so ausgebildet, daß es die Innenkanäle 39 der Filterrohre 30 abdeckt und Bohrungen 40 außerhalb der Filterrohrbereiche enthält. Dadurch kann das Abgas, das über den Resonator 38 in die erste Expansionskammer 35 eintritt, über die Bohrungen 40 in den Außenbereich 41 der Filterrohre 30 eintreten, von wo aus das Abgas 21 durch die Filterrohrwandung hindurch in den jeweiligen Innenkanal 39 einströmt. Das zweite Lochblech 33 enthält Bohrungen 42, die sich nur am Ausgang der Innenkanäle 39 befinden, damit das durch die Filter geströmte und gereinigte Gas in die zweite Expansionskammer 36 eintreten und von dort über einen Auslaßstutzen 44 abgeführt werden kann.

Die Ausbildung des Filterelementes 34 gemäß Fig. 2 läßt ebenfalls alle Variationsmöglichkeiten zu, die beispielsweise mit Blockfilterelementen oder dergleichen möglich sind. So .ist eine Veränderung der Porosität von außen nach innen der Rohrwandungen sowohl bei poröser Keramik als auch bei Ausführungen mit Drahtgeflechten möglich.

7.2334
15.10.1985

Fig. 4 ist ein Ausschnitt aus Fig. 2 gezeigt, bei dem weitere Details vorgesehen sind. Die Filterrohre 30 sind jeweils in einem sehr grobmaschigen Rohr 50 zwischen Metallwolle 51 eingebettet. Diese Art der Halterung schützt die Filterrohre 30 vor den Erschütterungen, die aufgrund von fahrbaren Unebenheiten und der Schallwellen im Abgas entstehen. Diese Ausführung ist besonders für Keramikfilterrohre 30 geeignet. Ferner ist das Filtergehäuse 31 am Außenumfang mit einer wärmeisolierenden Schicht 52 versehen, die verhindert, daß das in den Außenraum 41 eintretende Abgas 21 abkühlt, bevor es durch die Filterwände durchtritt.

Zur Verhütung der Korrosion werden die Innenbereiche aus Edelstahl hergestellt oder entsprechend mit einer Korrosions-Schutzschicht beschichtet.

Um den Regeneriervorgang für ungünstige Betriebsbedingungen zu unterstützen, ist gemäß Fig. 4 ein Rohrsystem 55, 56 vorgesehen, das aus einem zentralen Rohr 55 und Abzweigungsrohre 56 besteht, die jeweils in Außenbereiche 41 der Filterrohre 30 münden. Durch dieses Rohrsystem 55, 56 wird ein Oxidationsmittel 57 eingeführt, das entweder ein katalytisches oder ein leicht brennbares Mittel ist.

In dem Beispiel gemäß Fig. 2 ist der Abgasstrom von außen nach innen durch die Filterrohre 30 gerichtet. Vertauscht man aber die beiden Lochbleche 32 und 33, die zur Halterung und Lenkung des Abgasstromes dienen, dann wird das Abgas 21 die Filterrohre 30 von innen nach außen durchströmen.

7.2334
15.10.1985

0220505

Bei der Auslegung der Filterrohre wird das zu erreichende große Volumen mit Hilfe einer größeren Abmessung der Wanddicke der Rohre zu erreichen versucht, um zu einem akzeptablen Raumbedarf zu kommen. Eine Veränderung der Struktur, Beschichtung, Porosität wird in den Wandschichten erfolgen, wobei die Veränderungsrichtung sich nach der Durchströmrichtung des Abgases richtet.

Bei Keramikfilterelementen besteht der Grundkörper vorzugsweise aus $\alpha$-$Al_2O_3$ oder $Al_2O_3AlSi$, die eine höhere Festigkeit gegen mechanische Einwirkungen bieten. Jedoch ist die Oberfläche und damit auch die Porenoberfläche relativ glatt. Eine Verbesserung der Haftung von Partikeln wird durch eine Beschichtung der inneren Porenoberfläche mit $\gamma$-$Al_2O_3$ erreicht, die eine starke Rauhigkeit einbringt.

7.2334
15.10.1985

M.A.N. MASCHINENFABRIK AUGSBURG-NÜRNBERG
Aktiengesellschaft
gü/sd                              /1

München, 15. Oktober 1985

P a t e n t a n s p r ü c h e

1. Filter zur Reinigung von Abgasen von Verbrennungsmaschinen, bestehend aus einem porösen Filterelement, dadurch gekennzeichnet, daß ein großvolumiges Filterelement (14, 34) vorgesehen ist.

2. Filter nach Anspruch 1, dadurch gekennzeichnet, daß das Volumen des Filterelementes (14, 34) mindestens so groß ist, wie das Hubvolumen des Verbrennungsmotors (10).

3. Filter nach Anspruch 1 oder 2, dadurch gekennzeichnet, daß das Filterelement (14, 34) ein großes Speichervolumen für aus den Abgasen (21) herausfilterbare Partikel hat.

4. Filter nach einem der vorhergehenden Ansprüche, dadurch gekennzeichnet, daß das Filterelement (14) eine katalytische Beschichtung hat.

7.2334

0220505

5. Filter nach Anspruch 4, dadurch gekennzeichnet, daß das Filterelement (14, 34) mit einer Pt/Pd/Rh-Lösung im Verhältnis von 5-6/5-6/1 beschichtet ist.

6. Filter nach einem der vorhergehenden Ansprüche, dadurch gekennzeichnet, daß das Filterelement (14, 34) eine hohe Wärmekapazität hat.

7. Filter nach einem der vorhergehenden Ansprüche, dadurch gekennzeichnet, daß das Filterelement (14, 34) in Abgasströmungsrichtung abnehmende Porengröße hat.

8. Filter nach einem der vorhergehenden Ansprüche, dadurch gekennzeichnet, daß das Filterelement (14, 34) in Abgasströmungsrichtung abnehmende Porengröße hat.

9. Filter nach Anspruch 8, dadurch gekennzeichnet, daß die vom Abgasstrom zuerst beaufschlagte Filterschicht (14) eine Porengröße zwischen 50-60 Poren/cm hat und daß die letzte Filterschicht (14') eine Porengröße von 80-100 Poren/cm hat.

10. Filter nach einem der vorhergehenden Ansprüche, dadurch gekennzeichnet, daß das Filterelement (14, 14'; 34, 30) mehrteilig ausgebildet ist.

11. Filter nach einem der vorhergehenden Ansprüche, dadurch gekennzeichnet, daß das Filterelement (14, 34) eine Kombination aus Partikelfilter und Oxidations-Katalysator ist.

7.2334
15.10.1985

12. Filter nach einem der vorhergehenden Ansprüche, dadurch gekennzeichnet, daß das Filterelement (34) aus mehreren Hohlzylindern (30) aus porösem Material besteht.

13. Filter nach Anspruch 12, dadurch gekennzeichnet, daß sieben Filterrohre (30) in einer kreissymmetrischen Anordnung vorgesehen sind.

14. Filter nach Anspruch 12, dadurch gekennzeichnet, daß die Filterrohre (30) dickwandig ausgebildet sind.

15. Filter nach Anspruch 12, dadurch gekennzeichnet, daß die Poren der Filterelemente (30) innen größer sind als außen, daß die Poren im Innenbereich eine Beschichtung aus Mischoxiden oder ternären Vanadalen haben, die bevorzugt katalytische Wirkung hinsichtlich der Oxidation von Ruß- oder Kohlenwasserstoffen besitzt, ferner, daß die Poren im äußeren Bereich eine Edelmetallbeschichtung haben und daß die Filterrohre von innen nach außen durchströmt werden.

16. Filter nach einem der vorhergehenden Ansprüche, dadurch gekennzeichnet, daß das Volumen des Filterelementes (14, 34) etwa doppelt so groß ist wie das Hubvolumen des Verbrennungsmotors (10).

17. Filter nach einem der vorhergehenden Ansprüche, dadurch gekennzeichnet, daß das Filterelement aus poröser Keramik besteht, wobei die innere Oberfläche mit $\gamma$-Al$_2$O$_3$ beschichtet ist.

7.2334
15.10.1985

0220505

Fig.1

Fig.3

Fig.2

Fig.4

0220505

MAN Technologie GmbH

EPA EPO
DG 1
R

2 9 OKT. 1986

**MAN**
**TECHNOLOGIE**

Europäische Patentamt
Erhardtstraße 27
.8000 München 2

EPA-EPO-OEB
MÜNCHEN
Empfang bestätigt
Receipt acknowledged
Accuse reception

CD

München, 16. Oktober 1986
APA gü/7.2334-gü/sd

**Neu/New**

Telefon 08131/3735, 3741, 3763
3850, 3890, 3952
Telex 5270502 manp D
Telefax 08131/4127

Betreff:

Unsere europäische Patentanmeldung Nr. 86113249.6

Mit der Anlage werden neue Seiten 2 und 3 der Patentansprüche
in dreifacher Ausfertigung vorgelegt und es wird gebeten, die
ursprünglichen Seiten 2 und 3 der Patentansprüche durch die
neuen Seiten zu ersetzen.

In den ursprünglichen Ansprüchen ist ein Sachverhalt versehentlich identisch zwei Mal wiedergegeben, nämlich in den Ansprüchen
7 und 8.

Mit den neuen Anspruchsseiten wird dieser offensichtliche
Fehler ausgeräumt und konsequenterweise eine Umnumerierung
und folglich der Rückbeziehung der nachfolgenden Ansprüche
vorgenommen. Sachlich sind die Ansprüche 5 bis 16 identisch
mit den ursprünglichen Ansprüchen 5 bis 7 und 9 bis 17.

MAN Technologie GmbH

ppa.                    i.V.

**Anlagen:**
Neue Anspruchsseiten 2 und 3

Vorsitzender des Aufsichtsrates:
Dr. Klaus Götte
Vorstand: Dr. Friedrich Laußermair (Vorsitzender),
Horst Rauck
Sitz der Gesellschaft: München
Registergericht:
Amtsgericht München, HRB 77629

Postanschrift: MAN Technologie GmbH · Postfach 50 06 20
Dachauer Straße 667 · D-8000 München 50
Telefon: (0 89) 14 80-1 oder 14 80 und Hauеruf · Telefax: (0 89) 1 50 71 68
Telegramm: man-techno muenchen · Telex: 523211-21 ma d
Bahnstation für Bahnreisende: München-Karlsfeld
LZB Nürnberg, BLZ 760 000 00, Kto.-Nr. 76 008 200

Form M 5722-7.86 (München)